# EUROPÄISCHE PATENTSCHRIFT

(11) **EP 1 049 614 B1**
(45) Veröffentlichungstag und Bekanntmachung des Hinweises auf die Patenterteilung: **07.04.2004**
(21) Anmeldenummer: 99904813.5
(22) Anmeldetag: 26.01.1999
(51) Int. Cl.: B60T 17/16, F16D 65/16

(54) **HYDRAULISCH BETÄTIGTE RADBREMSE MIT FESTSTELLFUNKTION**
HYDRAULICALLY ACTIVATED WHEEL BRAKE WITH LOCKING FUNCTION
FREIN HYDRAULIQUE POUR ROUE COMPORTANT UNE FONCTION DE BLOCAGE

(30) Priorität: 26.01.1998 DE 19802778; 09.06.1998 DE 19825683
(43) Veröffentlichungstag der Anmeldung: 08.11.2000
(73) Patentinhaber: Continental Teves AG & Co. oHG, 60488 Frankfurt (DE)
(72) Erfinder: DRUMM, Stefan, A., D-55291 Saulheim (DE)
(86) Internationale Anmeldenummer: PCT/EP1999/000488
(87) Internationale Veröffentlichungsnummer: WO 1999/037519

(56) Entgegenhaltungen:
- EP-A- 0 526 273
- WO-A-92/06876
- DE-A- 19 621 533
- GB-A- 2 304 838

## Beschreibung

Die vorliegende Erfindung betrifft eine hydraulisch betätigte Radbremse gemäß dem Oberbegriff des Patentanspruchs 1.
Eine solche Radbremse ist aus der WO 92/06876 bekannt.

Die vorbekannte Radbremse ist als Scheibenbremse ausgeführt.
Die Feststellfunktion der Radbremse wird durch eine elektrisch betätigbare Verriegelungseinheit umgesetzt, die außen am Radbremsgehäuse der Scheibenbremse angeflanscht ist. Dabei ist eine Spindel vorgesehen, die den Hydraulikkolben in einer zugespannten Stellung hält. Die Spindel wird in diesem Zustand arretiert, indem die Spindelmutter mittels einer Zahnwelle axial gegen einen Anschlag am Getriebegehäuse gefahren wird. Der Hydraulikkolben ist somit auf der Feststellposition, in der sich der Bremsbelag mit der Bremsscheibe in Eingriff befindet, festgesetzt. Als nachteilig wird bei der vorbekannten Radbremse angesehen, dass eine schnelle Lösung der Arretierung nur bedingt möglich ist und dass die Radbremse eine kompakte Bauweise vermissen lässt.

Aus der GB-A-2 304 838 ist zudem ein Aktuator für eine Parkbremse bekannt, die mit Hilfe von Bowden-Zügen eine oder mehrere Radbremsen zuspannen kann. Zur Arretierung im gespannten Zustand ist bei dem vorbekannten Aktuator ein Hebel mit Zähnen vorgesehen, die in die Zähne einer beweglichen Platte greifen. Der Hebel wir dabei mittels einer Spule in eine Arretierungs- oder eine Lösestellung gebracht. Beim Lösen wird die Spule bestromt und der Eingriff der Zähne des Hebels mit den Zähnen der Platte gelöst. Der gespannte Bowden-Zug wird daraufhin frei gegeben und mittels einer Feder in diejenige Richtung, die entgegen der Zuspannrichtung liegt, gedrückt. Als nachteilig ist bei dem vorbekannten Aktuator anzusehen, dass die Zähne starkem Verschleiß unterliegen. Außerdem ist eine schnelle Lösung der Arretierung nur bedingt möglich.

Die Aufgabe der vorliegenden Erfindung ist es, eine Radbremse der eingangs genannten Gattung dahingehend zu verbessern, dass eine kompakte Bauweise möglich ist und dass eine Schnelllösevorrichtung der Feststellfunktion der Radbremse mit möglichst wenigen, einfach aufgebauten und weitgehend verschleißfrei arbeitenden Teilen realisiert wird.

Die Aufgabe wird erfindungsgemäß durch die Merkmale des Patentanspruchs 1 gelöst. Die weiteren Ansprüche enthalten vorteilhafte Aus- und Weiterbildungen der Erfindung.

Ein wesentlicher Vorteil der Erfindung besteht darin, daß die Schnelllösevorrichtung aus wenigen einfach aufgebauten Teilen besteht und im Radbremsgehäuse platzsparend integriert werden kann.

Die Schnelllösevorrichtung öffnet eine Arretiervorrichtung für eine hydraulisch betätigte Radbremse. Die Arretiervorrichtung besteht aus einer mittels Elektromotor drehbaren Bewegungsspindel mit Spindelmutter.

Im Zusammenwirken mit einer Regelung des Elektromotors kann die Zufahrgeschwindigkeit und der Zufahrweg der Bewegungsspindel sehr genau variiert und gesteuert werden.

Die Bewegungsspindel wird im Feststellmodus gegen den die Bremsbeläge tragenden Hydraulikkolben gefahren und dort mittels der selbsthemmend ausgelegten Spindelmutter auf der Feststellposition arretiert. Die Spindelmutter, welche verdrehsicher im Bremssattel angeordnet ist, wird im Feststellmodus mittels Schnellösevorrichrung axial festgesetzt.

Zum Lösen der Feststellbremse wird die Schnellösevorrichtung geöffnet, die Bewegungsspindel mit Spindelmutter wird dadurch in axialer Richtung freigesetzt und kann mit Hilfe des Elektromotors in ihre Ausgangsstellung gefahren werden. Die Bremsbeläge werden dadurch frei und die Feststellfunktion der Bremse ist außer Kraft.

Zum Öffnen der Schnellösevorrichtung können vorteilhafterweise verschiedenartige Aktuatoren Verwendung finden. Es ist z. B. das Lösen mit Hilfe eines Elektromagneten vorstellbar. Eine weitere Möglichkeit besteht durch den Spindelantrieb selbst. Hierzu ist ein Mechanismus am Spindelantrieb vorgesehen der beim Auftreten eines Antriebsmomentes in Richtung "Lösen" die entsprechende Betätigung bewirkt.

Für eine Notfallsituation, in der die beschriebenen Aktuatoren nicht betrieben werden können, ist ein Seilzug zum mechanischen Öffnen der Schnellösevorrichtung vorgesehen.

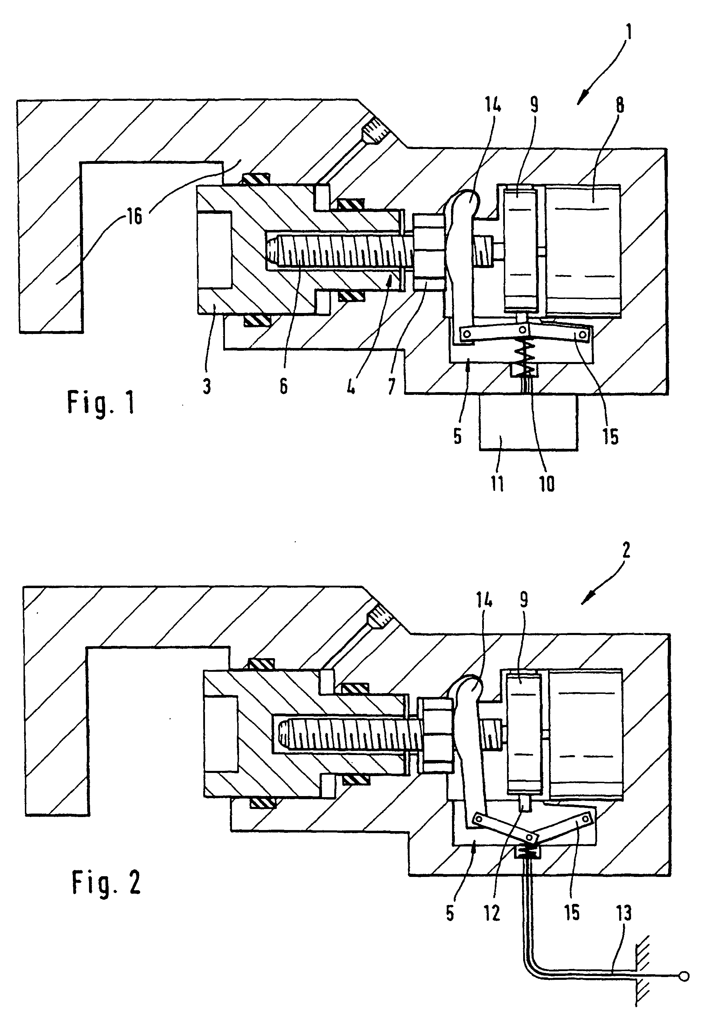

Der detaillierte Aufbau der erfinderischen Radbremse und deren Vorteile sind den Figuren 1 und 2 der Zeichnung zu entnehmen.
- Fig. 1: Querschnitt durch die erfinderische Radbremse mit Arretiervorrichtung, bei der die Schnellösevorrichtung mittels Elektromagneten ausgelöst wird, und
- Fig. 2: Querschnitt der erfinderischen Radbremse mit Arretiervorrichtung, bei der die Betätigung der Schnellösevorrichtung mechanisch erfolgt.

In Fig. 1 ist eine Radbremse 1 mit integrierter Arretiervorrichtung 4 schematisch dargestellt. Die Radbremse ist als Scheibenbremse ausgeführt. Der Sattel 3 kann als Schwimmsattel oder als Festsattel ausgelegt sein. Die Hydraulikkolben 3 der Radbremse 1 sind je nach Ausführung in einem oder beiden Schenkeln 16 des Radbremsgehäuses 2 angeordnet. Die Arretiervorrichtung 4 für den Feststellmodus der Radbremse 1 ist im Schenkel 16 des Radbremsgehäuses 2 integriert. Die Arretiervorrichtung 4 ist in diesem Ausführungsbeispiel aus Elektromotor 8, Getriebe 9, Schnellösevorrichtung 5, Spindelmutter 7 und Bewegungsspindel 6 aufgebaut. Das Getriebe 9 ist auf einer Achse zwischen der Abtriebswelle des Motors 8 und der Bewegungsspindel 6 angeordnet. Die Bewegungsspindel 6 verlängert axial verschiebbar die Abtriebswelle des Getriebes 9. Die Spindelmutter 7 wird verdrehsicher im Radbremsgehäuses 2 aufgenommen und durch die Schnellösevorrichtung 5 axial arretiert. Das freie Ende der Bewegungsspindel 6 befindet sich im arretierten Zustand im Eingriff mit dem Hydraulikkolben 3. Die Schnellösevorrichtung 5 ist aus einem Joch 14, einem Kniehebel 15 und einem Aktuator, der in Fig. 1 als Elektromagnet 11 ausgebildet ist, zusammengesetzt. Das Joch 14 der Schnellösevorrichtung 5 ist im Radbremsgehäuses 2 drehbar gelagert. An seinem dem Drehpunkt gegenüberliegenden Ende ist ein Kniehebel 15 befestigt, der mittels einer Feder 10 automatisch in seiner Verschlußposition, in der das Joch 14 gegen die Spindelmutter 7 drückt, gehalten wird. Um das Joch 14 von der Spindelmutter 7 zu lösen, so daß die Bewegungsspindel 6 axial verschiebbar ist, wird der Kniehebel 15 mittels eines Elektromagneten 11 geöffnet.

Die Radbremse 2 fungiert in dieser Ausführung erstens als Betriebs- und zum zweiten als Feststellbremse. Die Wirkungsweiseweise der Betriebsbremse entspricht der einer normalen Scheibenbremse. Die Kolben der Scheibenbremse werden hydraulisch mittels Bremsflüssigkeit betätigt und bringen dadurch die Bremsbeläge mit der Bremsscheibe in Eingriff.

wird die Radbremse 1 als Feststellbremse betrieben, wird diese ebenfalls durch das hydraulische Bremssystem eines Fahrzeugs betätigt. Nachdem die Bremsbeläge mit der Bremsscheibe in Eingriff gebracht worden sind, wird der Hydraulikkolben 3 mittels Arretiervorrichtung 4 festgesetzt. Hierzu wird die Gewindespindel 6 mittels eines Elektromotors 8 bis zur Anlage an den Hydraulikkolben 3 herangefahren. Durch die selbsthemmende Auslegung des Spindelgewindes ist der Hydraulikkolben 3 arretiert und kann sich nicht selbständig lösen. Die Bewegungsspindel 6 ist jetzt zwischen Hydraulikkolben 3 und Spindelmutter 7 verspannt. Um die Feststellbremse zu lösen, muß die Verspannung der Spindel 6 aufgehoben werden, so daß der Elektromotor 8 in der Lage ist, die Spindel 6 in ihre Ausgangspososition zurückzufahren. Dies geschieht dadurch, daß mittels eines Aktuators der Kniehebel 15 gegen die Feder 10 geöffnet wird und dadurch das Joch 14 von der Spindelmutter 7 abhebt. In dieser Position ist die Spindelmutter 7 mit der Spindel 6 frei und verschiebt sich mittels der Kolbenreaktionskraft axial auf dem freien Wellenende des Getriebewelle. Die freie Spindel 6 wird durch den Elektromotor 8 in ihre Ausgangsposition zurückgedreht.

Fig. 2 zeigt ebenfalls einen Querschnitt durch die Radbremse mit der erfindungsgemäßen Schnellösevorrichtung 5. In dieser Ausführungsvariante ist das Öffnen und Schließen der Schnellösevorrichtung 5 auf mechanischer Basis dargestellt.
Zum Umklappen des Kniehebels 15 wird das Getriebe 9 herangezogen. Das Getriebe 9 ist hierzu mit einem Auslösemechanismus 12 am Getriebegehäuse ausgestattet. Dieses ist so gelagert, daß er sich um wenige Winkelgrade drehen kann, bevor er von nicht dargestellten Anschlägen gehalten wird. Der Auslösemechanismus 12 ist am Getriebegehäuse angeordnet und ist als schiefe Ebene ausgeführt. Je nach Antriebsrichtung nimmt das Getriebegehäuse aufgrund des gegen die Abtriebswelle aufgebrachten Moments zwei Positionen ein. Wenn ein Getriebemoment in Richtung "Lösen" auftritt wird der Knieebel 15 durch die schiefe Ebene an dem am Getriebegehäuse angeordneten Auslösemechanismus 12 umgeklappt und damit geöffnet.

Außerdem kann der Kniehebel mit einem Seilzug 13, mit dem im Notfall, in der sich die Schnellösevorrichtung 5 nicht mehr durch die beschriebenen Aktuatoren öffenen läßt, gegen die Federkraft geöffnet werden.

Die Erfindung ist nicht auf das Ausführungsbeispiel eines Bremssattels beschränkt. So ist es zum Beispiel möglich die erfinderische Schnellösevorrichtung 5 in eine Trommelbremse zu integrieren. Hierzu ist es denkbar, daß die durch das Bremssystem eines Kraftfahrzeuges betätigten Bremsbacken der Trommelbremse durch das Joch 14 der Schnellösevorrichtung 5 festgesetzt werden und die Feststellfunktion dadurch erreicht wird. Das Joch kann mittels verschiedener Aktuatoren direkt oder ebenfalls mittels eines aktuatorbetriebenen Kniehebels betätigt werden.

## Patentansprüche

1. Hydraulisch betätigte Radbremse mit mindestens einem im Radbremsgehäuse (2) geführten Hydraulikkolben (3), der zur Realisierung einer Feststellfunktion mit einer elektromechanisch betätigbaren Arretiervorrichtung (4) zusammenwirkt, die einen Elektromotor (8), ein Getriebe (9) und eine mittels des Elektromotors (8) sowie des Getriebes (9) mit dem Hydraulikkolben (3) in Eingriff bringbare Bewegungsspindel (6) mit Spindelmutter (7) aufweist,
**dadurch gekennzeichnet, dass** die Arretiervorrichtung (4) in das Radbremsgehäuse (2) integriert ist und eine Schnelllösevorrichtung (5) aufweist, die mit der Spindelmutter (7) zusammenwirkt.

2. Hydraulisch betätigbare Radbremse nach Anspruch 1, **dadurch gekennzeichnet, daß** die Schnellösevorrichtung (5) ein mit der Spindelmutter (7) zusammenwirkendes Joch (14) aufweist, das an einen mittels einer Feder (10) in seiner Verschlußposition gehaltenen Kniehebel (15) gekoppelt ist.

3. Hydraulisch betätigbare Radbremse nach Anspruch 1, **dadurch gekennzeichnet, daß** die Schnellösevorrichtung(5) mittels eines Elektromagneten (11) betätigbar ist.

4. Hydraulisch betätigbare Radbremse nach Anspruch 1, **dadurch gekennzeichnet, daß** die Schnelllösevorrichtung (5) mittels eines am Getriebe (9) angeordnetem Auslösemechanismusses (12) betätigbar ist.

5. Hydraulisch betätigbare Radbremse nach Anspruch 1, **da** **durch gekennzeichnet,** daß die Schnellösevorrichtung (5) mittels eines Seilzugs (13) betätigbar ist.

6. Hydraulisch betätigbare Radbremse nach Anspruch 1, **dadurch gekennzeichnet, daß** die Spindelmutter (7) verdrehsicher im Radbremsgehäuse (2) gelagert und durch die Schnellösevorrichtung (5) axial arretiert ist.

## Claims

1. Hydraulically operated wheel brake with at least one hydraulic piston (3) guided in the wheel brake housing (2) and cooperating with an electromechanically operable locking device (4) to achieve a locking function, said locking device including an electric motor (8), a gear unit (9) and a motion spindle (6) with spindle nut (7) adapted to be engaged with the hydraulic piston (3) by means of the electric motor (8) and the gear unit (9), **characterized in that** the locking device (4) is integrated into the wheel brake housing (2) and includes a quick release device (5) cooperating with the spindle nut (7).

2. Hydraulically operable wheel brake as claimed in claim 1, **characterized in that** the quick release device (5) includes a yoke (14) that cooperates with the spindle nut (7) and is coupled to a knee lever (15) held in its closed position by means of a spring (10).

3. Hydraulically operable wheel brake as claimed in claim 1, **characterized in that** the quick release device (5) is operable by means of an electromagnet (11).

4. Hydraulically operable wheel brake as claimed in claim 1, **characterized in that** the quick release device (5) is operable by means of a trip mechanism (12) arranged at the gear unit (9).

5. Hydraulically operable wheel brake as claimed in claim 1, **characterized in that** the quick release device (5) is operable by means of a Bowden cable (13).

6. Hydraulically operable wheel brake as claimed in claim 1, **characterized in that** the spindle nut (7) is unrotatably mounted in the wheel brake housing (2) and axially locked by the quick release device (5).

## Revendications

1. Frein pour roue à actionnement hydraulique comportant au moins un piston hydraulique (3) guidé dans le boîtier (2) du frein de roue, lequel, pour réaliser une fonction de blocage, coopère avec un dispositif de blocage (4) à actionnement électromécanique qui comporte un moteur électrique (8), une transmission (9) et une vis de déplacement (6) avec écrou pour vis (7), qui peut être amenée en prise avec le piston hydraulique (3) au moyen du moteur électrique (8), **caractérisé en ce que** le dispositif de blocage (4) est intégré au boîtier (2) du frein de roue et comporte un dispositif de déverrouillage rapide (5) qui coopère avec l'écrou pour vis (7).

2. Frein pour roue à actionnement hydraulique selon la revendication 1, **caractérisé en ce que** le dispositif de déverrouillage rapide (5) comporte une palette (14) coopérant avec l'écrou pour vis (7), qui est accouplée à un levier à genouillère (15) maintenu dans sa position de fermeture au moyen d'un ressort (10).

3. Frein pour roue à actionnement hydraulique selon la revendication 1, **caractérisé en ce que** le dispositif de déverrouillage rapide (5) peut être actionné au moyen d'un électro-aimant (11).

4. Frein pour roue à actionnement hydraulique selon la revendication 1, **caractérisé en ce que** le dispositif de déverrouillage rapide (5) peut être actionné au moyen d'un mécanisme de déclenchement (12) disposé sur la transmission (9).

5. Frein pour roue à actionnement hydraulique selon la revendication 1, **caractérisé en ce que** le dispositif de déverrouillage rapide (5) peut être actionné au moyen d'une commande par câble (13).

6. Frein pour roue à actionnement hydraulique selon la revendication 1, **caractérisé en ce que** l'écrou pour vis (7) est monté de manière à ne pouvoir tourner dans le boîtier (2) pour frein de roue et est bloqué axialement par le dispositif de déverrouillage rapide (5).
